# EUROPÄISCHE PATENTSCHRIFT

(11) **EP 1 972 812 B1**
(45) Veröffentlichungstag und Bekanntmachung des Hinweises auf die Patenterteilung: **09.11.2011**
(21) Anmeldenummer: 08003330.1
(22) Anmeldetag: 25.02.2008
(51) Int. Cl.: F16D 13/75, F16D 13/58

(54) **Tellerfederhebel für eine Reibungskupplung mit Verschleißnachstellung**
Disc spring lever for a friction clutch with abrasion adjustment
Levier de ressort à disque pour un embrayage à friction doté d'un ajustage de l'usure

(30) Priorität: 22.03.2007 DE 102007013784
(43) Veröffentlichungstag der Anmeldung: 24.09.2008
(73) Patentinhaber: Schaeffler Technologies GmbH & Co. KG, 91074 Herzogenaurach (DE)
(72) Erfinder: Lindenbaum, Tobias, 76530 Baden-Baden (DE)

(56) Entgegenhaltungen:
- EP-A1- 1 568 905
- WO-A1-2006/105750
- DE-A1- 1 945 233
- GB-A- 915 880

## Beschreibung

Die Erfindung betrifft einen Tellerfederhebel zum Betätigen einer Reibungskupplung mit an dem Tellerfederhebel befestigter Antriebsfeder für eine Verschleißnachstellung der Kupplung.

Insbesondere bei von einem Aktor betätigten Reibungskupplungen ist eine in die Kupplung integrierte Verschleißnachstellung vorteilhaft, mit der ermöglicht wird, dass eine Kennlinie, die das übertragbare Kupplungsmoment in Abhängigkeit von der Stellung eines Aktors oder eines Betätigungsglieds der Kupplung angibt, weitgehend unabhängig von einem Verschleiß der Reibbeläge der Kupplung konstant bleibt. Bekannt sind Nachstelleinrichtungen, bei denen der Tellerfederhebel eine Antriebsfeder trägt, deren äußerer Umfang von einer konischen Verformung des Tellerfederhebels abhängt. Über einem Schwellwert liegende Umfangsänderungen der Antriebsfeder, wie sie beispielsweise bei einem vorbestimmten Verschleiß der Reibbeläge auftreten, werden für eine Verschleißnachstellung genutzt.

WO 2006/105750 und EP 1 568 905 zeigen Kupplungen die mit Verschleißnachstelleinrichtungen versehen wird.

Der Erfindung liegt die Aufgabe zugrunde, einen in seinem Aufbau einfachen, mit einer Antriebsfeder für eine Verschleißnachstelleinrichtung versehenen Tellerfederhebel zum Betätigen einer Reibungskupplung zu schaffen, bei dem gewährleistet ist, dass sich der Umfang der Antriebsfeder in einer vorbestimmten Beziehung zur konischen Verformung des Tellerfederhebels ändert.

Diese Aufgabe wird mit einem Tellerfederhebel gemäß dem Anspruch 1 gelöst.

Die Unteransprüche sind auf vorteilhafte Ausführungsformen und Weiterbildungen des erfindungsgemäßen Tellerfederhebels gerichtet.

Ein erfindungsgemäßer Tellerfederhebel zum Betätigen einer Reibungskupplung mit an dem Tellerfederhebel befestigter Antriebsfeder für eine Verschleißnachstelleinrichtung der Kupplung weist einen in Umfangsrichtung durchgehenden, radial äußeren Ringscheibenbereich auf, von dem radial einwärts gerichtete, in Umfangsrichtung benachbarte Federzungen ausgehen, auf die etwa radial gerichtete Versteifungsrippen aufgebracht sind, und welche Antriebsfeder an der von den Versteifungsrippen abgewandten Seite des Tellerfederhebels angeordnet ist, einen radial äußeren, mit einem radialen Schlitz versehenen Ringteil aufweist, der an einem, dem Schlitz benachbarten Endbereich mit einer Antriebsfederklinke versehen ist und von dem radial einwärts Speichen ausgehen, die an den Federzungen befestigt sind, wobei sich der Ringteil auf mit vorbestimmter Höhe ausgebildeten Köpfen von Nieten abstützt, mit denen die Versteifungsrippen an den Federzungen befestigt sind.

Mit Vorteil sind die Versteifungsrippen radial innerhalb der Nieten, auf deren Köpfen sich der Ringteil abstützt, mittels weiterer Nieten an den Federzungen befestigt, mittels welcher weiterer Nieten auch die Speichen der Antriebsfeder an den Federzungen befestigt sind.

Vorteilhaft ist weiter, wenn die Speichen an ihren radial inneren Enden U-förmig ausgebildet sind und die nicht mit dem Ringteil verbundenen, radial auswärts gerichteten Schenkel der Speichen mittels der weiteren Nieten an den Federzungen befestigt sind.

Die Erfindung wird im Vorliegenden anhand schematischer Zeichnungen beispielsweise und mit weiteren Einzelheiten erläutert.

In den Figuren stellen dar:
- Figur 1: einen Prinziphalbschnitt durch eine an sich bekannte Reibungskupplung,
- Figur 2: ein Funktionsprinzip einer an sich bekannten Verschleißnachstellung,
- Figur 3: eine Aufsicht auf die Anordnung gemäß Figur 2 zur weiteren Erläuterung des Funktionsprinzips,
- Figur 4: eine perspektivische Ansicht eines Tellerfederhebels mit Verstärkungsrippen,
- Figur 5: eine perspektivische Ansicht des Tellerfederhebels gemäß Figur 5 mit daran befestigter Antriebsfeder,
- Figur 6: einen Querschnitt durch die Anordnung gemäß Figur 5, und
- Figur 7: die Detailansicht X der Figur 6 in vergrößertem Maßstab.

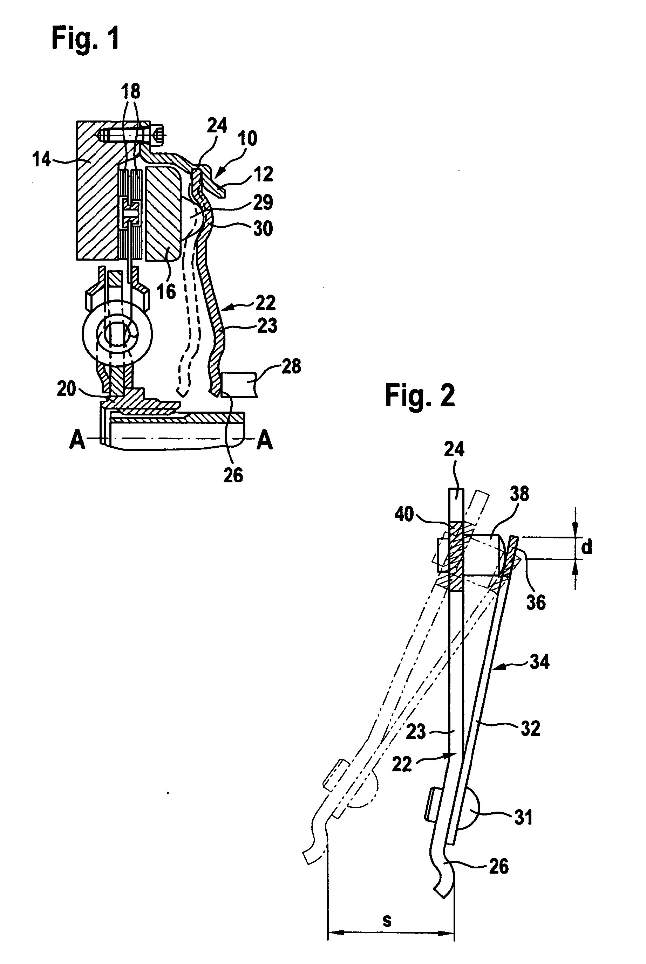

Figur 1 zeigt, um das grundsätzliche Verständnis der Erfindung zu erleichtern, eine an sich bekannte Reibungskupplung 10 mit der Drehachse A-A.

Die Kupplung enthält einen Deckel bzw. ein Gehäuse 12, der bzw. das starr mit einer Gegendruckplatte 14 verbunden ist, die beispielsweise starr mit einer Schwungscheibe einer Brennkraftmaschine verbunden ist. Weiter ist eine mit dem Gehäuse 12 drehfest jedoch axial verschiebbar verbundene Anpressplatte 16 vorgesehen, mittels der Reibbeläge 18 gegen die Gegendruckplatte 14 pressbar sind, welche Reibbeläge an einer Kupplungsscheibe 20 angebracht sind, die drehfest mit einer Welle 21, beispielsweise einer Getriebeeingangswelle, verbunden ist.

Zum axialen Bewegen der Anpressplatte 16 ist ein Telerfederhebel 22 vorgesehen, der aus einzelnen in Umfangsrichtung nebeneinander angeordneten, radial einwärts gerichteten und radial außen über einen äußeren ringscheibenförmigen Umfangsrandbereich 24 miteinander verbundenen Federzungen 23 besteht. Im dargestellten Beispiel stützt sich der Tellerfederhebel an seinem äußeren Umfangsrand 24 an dem Gehäuse 12 ab und wird an seinem inneren Umfangsrand 26 mittels eines Betätigungsglieds 28 axial bewegt. Das Betätigungsglied 28 enthält beispielsweise ein mit der Achse A-A konzentrisches Ringlager, so dass eine lineare Bewegung eines ortsfesten Aktors in eine lineare Bewegung des inneren Umfangsrands 26 des sich drehenden Tellerfederhebels 22 umsetzbar ist.

Der Tellerfederhebel 22 wirkt über Rampenflächen 29 mit Rampenflächen 30 der Anpressplatte 16 zusammen, wobei die Rampenfläche in Umfangsrichtung mit unterschiedlicher Dicke ausgebildet sind, so dass eine Relativdrehung zwischen der Anpressplatte 16 und dem Tellerfederhebel 22 einen Ausgleich von Verschleiß der Reibbeläge 18 oder sonstigem Verschleiß in Elementen der Kupplung ermöglicht. Gepunktet ist die Stellung des Tellerfederhebels 22 eingezeichnet, in der die Anpressplatte 16 gegen die Reibbeläge 18 gedrückt ist, d.h. die Kupplung geschlossen oder zugedrückt ist. Die mit ausgezogenen Linien dargestellte Stellung des Tellerfederhebels 22 entspricht dem offenen bzw. nicht eingedrückten Zustand der Kupplung.

In an sich bekannter Weise kann die Kupplung durch einfache Umkonstruktion als zugedrückte, zugezogene oder aufgedrückte bzw. aufgezogene Kupplung konstruiert sein.

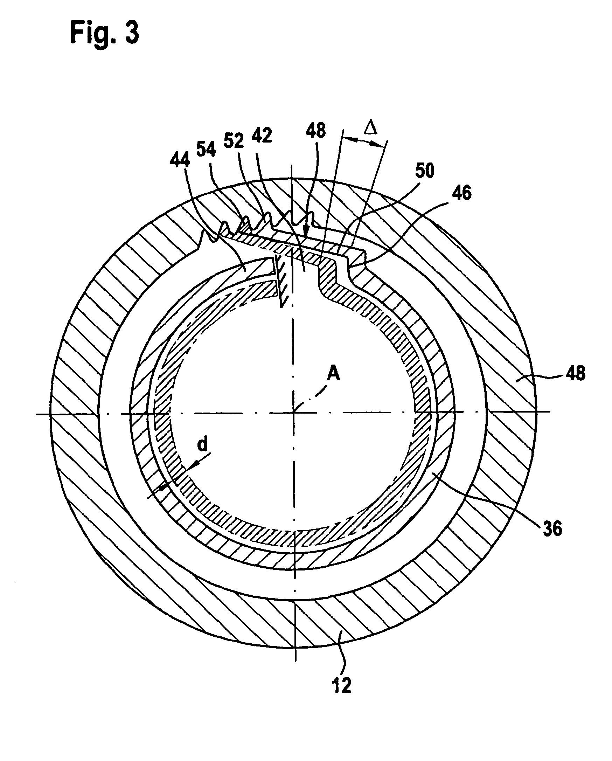

Figur 2 zeigt in Verbindung mit Figur 3 das Grundprinzip einer an sich bekannten Verschleißnachstellvorrichtung. Dabei zeigt Figur 2 einen Halbschnitt durch die Hebelfeder mit zugehörigen Bauteilen und Figur 3 eine Aufsicht auf Elemente der Figur 2 zur Erläuterung der Verschleißnachstellung.

Gemäß Figur 2 sind die Federzungen 23 des Tellerfederhebels 22 beispielsweise durch Nieten 31 mit Speichen 32 einer insgesamt mit 34 bezeichneten Antriebsfeder verbunden, die aus den Speichen und einem äußeren, die Speichen verbindenden, ringscheibenförmigen Umfangsring 36 zusammengesetzt ist. Die Antriebsfeder 34 stützt sich an der Hebelfeder 22 über Distanzstücke 38 ab, die beispielsweise mit dem Tellerfederhebel 22 vernietet sind und zu dem Umfangsring 36 hin eine ballige Oberfläche aufweisen.

Wenn die Kupplung eingerückt wird, wird der Tellerfederhebel 22 an seinem inneren Umfangsrand 26 gemäß Figur 2 um die Strecke s nach links bewegt und schwenkt dabei um eine am Gehäuse 12 (Figur 1) ausgebildete Gegenlagerung, an der sich ein mit 40 bezeichneter Kraftrand des äußeren Umfangsrandbereiches 24 abstützt. Die Ringachse dieser Schwenklagerung liegt vorteilhafter Weise in radialer Nähe des Bereiches, in dem die Distanzstücke 38 mit der Hebelfeder 22 verbunden sind.

Wie aus der Figur 2 unmittelbar ersichtlich, bleibt beim Verschwenken der Hebelfeder 22 der Abstand zwischen den Nieten 31 und dem Kraftrand 40 im Wesentlichen konstant, so dass sich das durch die Hebelfeder 22, die Antriebsfeder 34 und das Distanzstück 38 gebildete Dreieck derart verformt, dass sich die Antriebsfeder 34 unter Abgleiten auf dem Distanzstück 38 mit ihrem Umfangsring 36 um die Strecke d radial einwärts bewegt.

Figur 3 verdeutlicht die Verhältnisse in Aufsicht und zeigt zusätzlich weitere funktionswesentliche Details der Anordnung. Der Umfangsring 36 ist mit einem radialen Spalt bzw. Schlitz 42 versehen. Ein dem Schlitz 42 benachbartes Ende 44 des Umfangsrings 36 ist in Umfangsrichtung relativ zu dem Federhebel 22 (Figur 1) der Kupplung fixiert. Das andere, an den Schlitz 42 grenzende Ende 46 des Umfangsrings 36 ist mit einer Klinke 48 versehen, die aus einem den Schlitz 42 radial außen überlagernden wegzeigenden Federarm 50 besteht, der an seinem freien Ende wenigstens einen Zahn 52 aufweist, der von dem Federarm 50 radial auswärts in Eingriff in eine Verzahnung 54 gedrängt ist. Die Verzahnung 54 ist am Gehäuse 12 oder an einem eigenen Bauteil, beispielsweise einem Verstellring, ausgebildet. Wie ersichtlich, ist der Zahneingriff derart, dass einer Bewegung der Klinke 48 relativ zu der Verzahnung 54 in Gegenuhrzeigerrichtung die Klinke die Verzahnung unter elastischer Verformung des Federarms 50 im Sinne eines Freilaufes überläuft, wohingegen in Gegenrichtung ein Drehmoment übertragender Eingriff zwischen dem Zahn 52 und der Verzahnung 54 besteht.

Wenn der geschlitzte Umfangsring 36 aus der ausgezogenen Stellung, die der nicht betätigten Stellung der Kupplung bzw. der in Figur 2 ausgezogenen Stellung entspricht, durch Betätigen der Kupplung um den Radialweg d nach innen gezogen wird (gestrichelt dargestellte Stellung), deckt er aufgrund seiner konstanten Umfangslänge einen größeren Winkelbereich ab, d.h. die Breite des Schlitzes 42 nimmt um das Maß Δ ab. Da das Ende 44 des Umfangsrings 36 in tangentialer Richtung festgelegt ist, führt dies zu einer Tangentialbewegung bzw. Bewegung in Umfangsrichtung um die Strecke Δ des mit der Klinke 48 versehenen Endes 46 des Umfangsrings. Dies wird dadurch ermöglicht, dass der Umfangsring 36 über biegeweiche Speichen 32 (in Figur 3 nicht dargestellt) mit dem Tellerfederhebel 22 verbunden ist und die Berührstellen zwischen dem Umfangsring 36 und den Distanznieten 38 eine tangentiale Gleitbewegung zulassen. Durch diesen Mechanismus entsteht ein nahezu lineares Verhältnis zwischen Einrückweg bzw. Schwenkwinkel des Tellerfederhebels 22 und dem Tangentialweg Δ der Antriebsfeder 34 bzw. von deren Umfangsring 36. Im Normalfall reicht der Tangentialweg an der Klinke 48 gerade nicht aus, um in den nächsten Zahn der Verzahnung 54 zu springen. Mit zunehmendem Kupplungsverschleiß erhöht sich jedoch die Tangentialbewegung und die Klinke erreicht die nächste Zahnlücke. Beim nachfolgenden Öffnen der Kupplung schiebt die Antriebsfeder bzw. der Umfangsring 36 die Klinke fest in die Verzahnung zurück, wobei die Klinke an einem Zurückgleiten gehindert ist und die Antriebsfeder somit über die Klinke eine Tangentialkraft auf den Rampenmechanismus 29, 30 (Figur 1) ausübt, so dass durch eine Relativverdrehung zwischen dem Tellerfederhebel und dem Gehäuse eine Nachstellung erzielt wird. Das Verhältnis von d zu Δ lässt sich durch die Konstruktion des Verbandes Tellerfederhebel-Antriebsfeder beeinflussen.

Das geschilderte Grundprinzip lässt sich in unterschiedlicher Weise zur Verschleißnachstellung nutzen:

Die Antriebsfeder 34 bewirkt bei Belagverschleiß eine Verschiebung der Klinke 48 relativ zu der Verzahnung 54, die als Umfangsverzahnungssegment ausgebildet ist und über einen Umfangswinkelbereich reicht, der zum Ausgleich des gesamten Verschleißes ausreicht. Welches Bauteil dabei feststeht und welches sich dreht, hängt von der Konstruktion ab. Wenn die Verzahnung feststeht, wird der Tellerfederhebel mit Rampen versehen und ist relativ zum Kupplungsgehäuse verdrehbar. Die Antriebsfeder kann sich dann zusammen mit der Hebelfeder verdrehen. Die Rampen des Tellerfederhebels verändern die Axialposition der Anpressplatte und gleichen den Verschleiß aus.

Wenn die Antriebsfeder dazu genutzt wird, um einen Verstellring (nicht dargestellt) anzutreiben, wird der Tellerfederhebel-Antriebsfeder-Verbund im Kupplungsgehäuse gegen Verdrehen gesichert. Die Verzahnung ist dann Teil des mit Rampen versehenen Verstellrings, wobei die Rampen sowohl zwischen dem Tellerfederhebel und dem Verstellring als auch zwischen dem Verstellring und einem mit Anpressplatte drehfest verbundenem Bauteil angeordnet sein können.

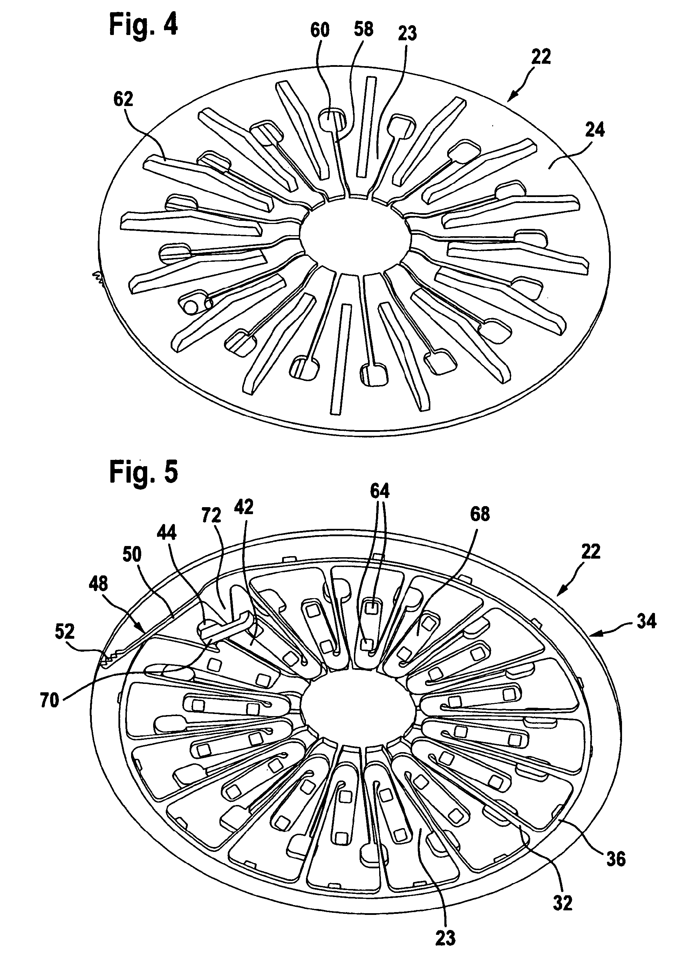

Im Folgenden wird anhand der Figur 4 bis 7 eine erfindungsgemäße Konstruktion der Baugruppe aus Tellerfederhebel und Antriebsfeder beschrieben, wobei die Antriebsfeder 34 im Vergleich zur Ausführungsform gemäß Figur 2 auf der anderen Seite des Tellerfederhebels 22 angeordnet ist.

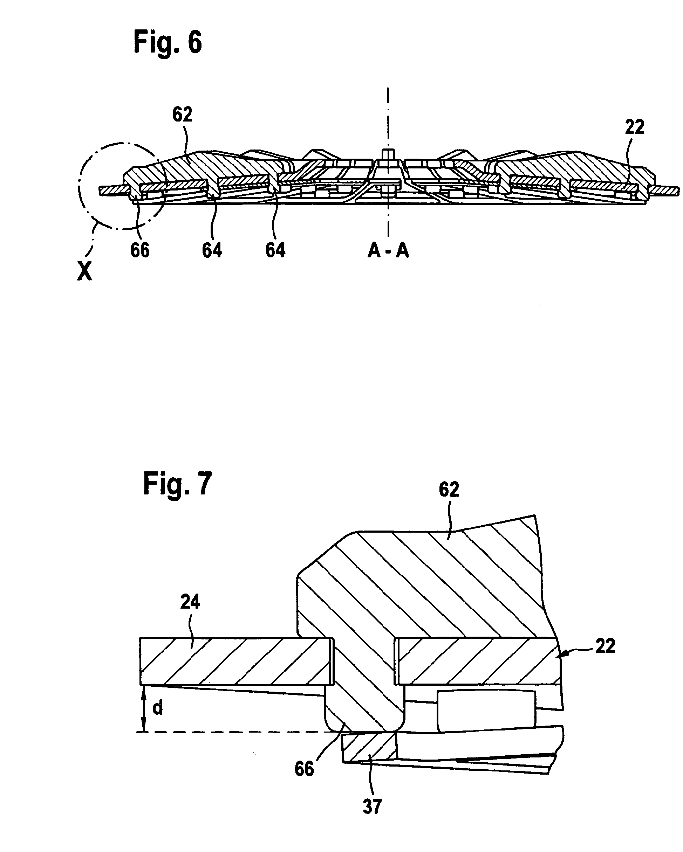

Figur 4 zeigt in perspektivischer Ansicht den Tellerfederhebel 22, von dessen äußerem Umfangsrandbereich 24 die Federzungen 23 radial einwärts vorstehen. Zwischen den Federzungen 23 sind jeweils Schlitze 58 ausgebildet, die von in dem Tellerfederhebel 22 ausgebildeten Durchgangslöchern 60 ausgehen. Zur Versteifung der konischen Verformbarkeit des Tellerfederhebels 22 sind Versteifungsrippen 62 vorgesehen, die vom Ringscheibenbereich 24 radial einwärts gerichtet sind und bevorzugt mehr als die halbe Länge jeder Federzunge 23 überdecken. Die Versteifungsrippen 62 sind vorteilhafter Weise mit dem Tellerfederhebel 22 vernietet, wobei zwei radial beabstandete Nieten 64 im Bereich jeder Federzunge 23 angeordnet sind und ein weiterer Niet 66 im Bereich des Ringscheibenbereiches 24 angeordnet ist (vergleiche Figur 5 und 6).

Figur 5 zeigt die Ausbildung und die Befestigung der Antriebsfeder 34 an dem Tellerfederhebel 22, wobei die von den Versteifungsrippen 62 abgewandte Seite des Tellerfederhebels 22 sichtbar ist. Wie ersichtlich, sind die Speichen 32 der Antriebsfeder 34 ähnlich wie bei der Ausführungsform gemäß Figur 2 an ihren inneren Enden insgesamt U-förmig radial auswärts abgebogen und enden in Laschen bzw. Schenkeln 68, die mit denselben Nieten 64 an den Federzungen 23 des Tellerfederhebels 22 befestigt sind, mit denen auch die Versteifungsrippen 62 befestigt sind. Der Umfangsring 36 der Antriebsfeder 34 liegt auf den Köpfen der Nieten 66 auf, mit denen die Versteifungsrippen 62 am Umfangsrandbereich 24 des Tellerfederhebels 22 befestigt sind. Die Köpfe der Nieten 66 entsprechen somit den Distanzstücken 38 der Figur 2.

Das gemäß der Figur linksseitig des Schlitzes 42 befindliche Ende des Umfangrings 36 der Antriebsfeder 34 bzw. eines Endbereichs der Antriebsfeder 34 ist an dem Tellerfederhebel 22 vernietet.

Der Befestigungsbügel 70 und der Vorsprung 72 der Antriebsfeder bilden zusammen einen Anschlag, der die maximale Bewegung des Federarms in Nachstellrichtung begrenzt.

Mit der beschriebenen Befestigung der Antriebsfeder 34 an dem Tellerfederhebel 22 wird nicht nur erreicht, dass keine gesonderten Befestigungselemente für die Antriebsfeder 34 erforderlich sind. Dadurch, dass der geschlitzte Umfangsring 36 der Antriebsfeder 34 sich auf den Köpfen der radial äußersten Nieten 66 abstützt, kann durch zweckentsprechende Wahl der Höhe d der Köpfe der Nieten 66 der axiale Abstand zwischen dem äußeren Umfangsrandbereich 24 und dem Umfangsring 36 festgelegt werden, der maßgeblich für die Änderung des Umfangs des Umfangrings 36 bzw. der Weite des Schlitzes 42 bei einer konischen Verformung des Tellerfederhebels 22 ist. Im dargestellten Beispiel bildet der äußere Umfangsrandbereich 24 einen für die Verformung des Tellerfederhebels 22 maßgeblichen Kraftrand und bildet der Umfangsring 36 den für die Verformung der Antriebsfeder 34 bzw. für deren Umfangsänderung maßgeblichen Kraftrand.

Bei der Montage der Baugruppe aus Tellerfederhebel 22, Antriebsfeder 34 und Versteifungsrippen 62 werden die vorzugsweise einteilig mit den Versteifungsrippen 62 ausgebildeten Nieten zunächst durch entsprechende Ausnehmungen des Tellerfederhebels durchgesteckt. Dann werden die radial äußersten Nieten 66 gestaucht, wobei für die Höhe der Nietköpfe 66 ein dem jeweiligen Einsatzzweck entsprechendes Maß d eingehalten wird. Anschließend wird die Antriebsfeder 34 mit dem Umfangsring 36 auf die Köpfe der Nieten 66 aufgelegt und auf die Nieten 64 aufgeschoben und anschließend durch Stauchen der Nieten 64 befestigt.

Der beschriebene Tellerfederhebel mit den an ihm befestigten Versteifungsrippen und der Antriebsfeder kann in unterschiedlichster Weise für eine Verschleißnachstellung einer Reibungskupplung eingesetzt werden, beispielsweise auch mit Hilfe zweier an der Antriebsfeder 34 auf verschiedenen Seiten des Schlitzes 42 ausgebildeten Verzahnungen, die in an einem Gegenbauteil ausgebildete Gegenverzahnungen derart eingreifen, dass bei einer überschwelligen Umfangsformung eine Relativerdrehung zwischen der Antriebsfeder und dem Gegenbauteil erfolgt, die wiederum zu einem Verschleißausgleich führt. Die dabei verwendete Reibungskupplung kann eine in Schließstellung gedrückte, in Schließstellung gezogene, in Offenstellung gedrückte oder in Offenstellung gezogene Kupplung sein.

### Bezugszeichenliste

- 10: Reibungskupplung
- 12: Gehäuse
- 14: Gegendruckplatte
- 16: Anpressplatte
- 18: Reibbelag
- 20: Kupplungsscheibe
- 21: Welle
- 22: Tellerfederhebel
- 23: Federzunge
- 24: äußerer Umfangsrandbereich
- 26: innerer Umfangsrand
- 28: Betätigungsglied
- 29: Rampenfläche
- 30: Rampenfläche
- 31: Nieten
- 32: Speichen
- 34: Antriebsfeder
- 36: Umfangsring
- 38: Distanzstück
- 40: Kraftrand
- 42: Schlitz
- 44: Ende
- 46: Ende
- 48: Klinke
- 50: Federarm
- 52: Zahn
- 54: Verzahnung
- 58: Schlitz
- 60: Loch
- 62: Versteifungsrippe
- 64: Niet
- 66: Niet
- 68: Schenkel
- 70: Befestigungsbügel
- 72: Vorsprung

## Patentansprüche

1. Tellerfederhebel zum Betätigen einer Reibungskupplung mit einer an dem Tellerfederhebel (22) befestigten Antriebsfeder (34) für eine Verschleißnachstelleinrichtung der Kupplung, welcher Tellerfederhebel einen in Umfangsrichtung durchgehenden, radial äußeren Umfangsrandbereich (24) aufweist, von dem radial einwärts gerichtete, in Umfangsrichtung benachbarte Federzungen (23) ausgehen **dadurch gekennzeichnet, dass** auf die Federzungen etwa radial gerichtete Versteifungsrippen (62) aufgebracht sind, und, dass die Antriebsfeder an der von den Versteifungsrippen abgewandten Seite des Tellerfederhebels angeordnet ist, wobei die Antriebsfeder einen radial äußeren, mit einem radialen Schlitz (42) versehenen Umfangsring (36) aufweist, der an einem, dem Schlitz benachbarten Endbereich mit einer Klinke (48) versehen ist und von dem radial einwärts Speichen (32) ausgehen, die an den Federzungen (23) befestigt sind, wobei sich der Umfangsring (36) auf mit vorbestimmter Höhe ausgebildeten Köpfen von Nieten (66) abstützt, mit denen die Versteifungsrippen (62) an den Federzungen (23) befestigt sind.

2. Tellerfederhebel nach Anspruch 1, wobei die Versteifungsrippen (62) radial innerhalb der Nieten (66), auf deren Köpfen sich der Umfangsring (36) abstützt, mittels weiterer Nieten (64) an den Federzungen (23) befestigt sind, mittels welcher weiterer Nieten auch die Speichen (32) der Antriebsfeder (34) an den Federzungen befestigt sind.

3. Tellerfederhebel nach Anspruch 1 oder 2, wobei die Speichen (32) an ihren radial inneren Enden U-förmig ausgebildet sind und die nicht mit dem Umfangsring (36) verbundenen, radial auswärts gerichteten Schenkel (68) der Speichen mittels der weiteren Nieten (64) an den Federzungen (23) befestigt sind.

## Claims

1. Disc spring lever for actuating a friction clutch with a moving spring (34) fastened on the disc spring lever (22) for a wear adjustment device of the clutch, which disc spring lever has a radially external circumferential edge region (24) which passes through in the circumferential direction, from which circumferential edge region (24) spring tabs (23) which are directed radially inwards and are adjacent in the circumferential direction proceed, **characterized in that** reinforcing ribs (62) directed approximately radially towards the spring tabs are mounted, and that the moving spring is arranged on the side of the disc spring lever facing away from the reinforcing ribs, wherein the moving spring has a radially external circumferential ring (36) provided with a radial slot (42), which circumferential ring (36) is provided at an end region adjacent to the slot with a pawl (48) and from which spokes (32) proceed radially inwards which are fastened on the spring tabs (23), wherein the circumferential ring (36) is supported by rivets (66) on heads formed with a predetermined height, with which rivets (66) the reinforcing ribs (62) are fastened on the spring tabs (23).

2. Disc spring lever according to Claim 1, wherein the reinforcing ribs (62) are fastened radially within the rivets (66), on the heads of which the circumferential ring (36) is supported, by means of further rivets (64) on the spring tabs (23), by means of which further rivets the spokes (32) of the moving spring (34) are also fastened on the spring tabs.

3. Disc spring lever according to Claim 1 or 2, wherein the spokes (32) are formed U-shaped at their radially inner ends and the limbs (68), which are not connected to the circumferential ring (36) and are directed radially outwards, of the spokes are fastened by means of the further rivets (64) on the spring tabs (23).

## Revendications

1. Levier de ressort diaphragme pour l'actionnement d'un embrayage à friction comportant un ressort d'entraînement (34) fixé au levier de ressort diaphragme (22) pour un dispositif de rattrapage de l'usure de l'embrayage, lequel levier de ressort diaphragme comprend une région de bord périphérique (24) radialement extérieure, continue dans la direction périphérique, à partir de laquelle région de bord périphérique partent des langues de ressort (23) adjacentes dans la direction périphérique, orientées radialement vers l'intérieur, **caractérisé en ce que** des nervures de renforcement (62) orientées approximativement radialement sont appliquées sur les langues de ressort, et **en ce que** le ressort d'entraînement est disposé sur le côté du levier de ressort diaphragme qui est opposé aux nervures de renforcement, le ressort d'entraînement comprenant une bague périphérique (36) radialement extérieure, munie d'une fente (42) radiale, laquelle bague périphérique est munie d'un cliquet (48) au niveau d'une région d'extrémité adjacente à la fente, des rayons (32) qui sont fixés sur les langues de ressort (23) partant radialement vers l'intérieur à partir de cette bague, la bague périphérique (36) s'appuyant sur des têtes de rivets (66) réalisées avec une hauteur prédéfinie, au moyen desquels rivets les nervures de renforcement (62) sont fixées sur les langues de ressort (23).

2. Levier de ressort diaphragme selon la revendication 1, dans lequel les nervures de renforcement (62) sont fixées sur les langues de ressort (23) radialement à l'intérieur des rivets (66) sur les têtes desquels s'appuie la bague périphérique (36), au moyen de rivets supplémentaires (64) au moyen desquels les rayons (32) du ressort d'entraînement (34) sont également fixés sur les langues de ressort.

3. Levier de ressort diaphragme selon la revendication 1 ou 2, dans lequel les rayons (32) sont réalisés en forme de U au niveau de leurs extrémités radialement intérieures, et les branches (68) des rayons qui sont orientées radialement vers l'extérieur et ne sont pas reliées à la bague périphérique (36) sont fixées sur les langues de ressort (23) au moyen des rivets supplémentaires (64).
